# EUROPEAN PATENT APPLICATION

(11) **EP 3 848 799 A1**
(43) Date of publication of application: **14.07.2021**
(21) Application number: 19857566.4
(22) Date of filing: 08.07.2019
(51) Int. Cl.: G06F 9/451

(54) **APPLICATION PAGE PRESENTATION METHOD AND APPARATUS, STORAGE MEDIUM, AND ELECTRONIC DEVICE**

(30) Priority: 07.09.2018 CN 201811045455
(71) Applicant: GUANGDONG OPPO MOBILE TELECOMMUNICATIONS CORP., LTD., Wusha, Chang'an Dongguan Guangdong 523860 (CN)
(72) Inventor: LI, Senlin, Dongguan Guangdong 523860 (CN)
(74) Representative: Penza, Giancarlo
(86) International application number: PCT/CN2019/095102
(87) International publication number: WO 2020/048218

(57) **Abstract**

Disclosed is an application page presentation method. The method comprises: receiving an open instruction for an application page, wherein the instruction carries a corresponding application identifier; sending the application identifier to a server, and receiving and caching a configuration file returned by the server; receiving a view operation instruction sent by the server; and presenting the application page according to the view operation instruction and the configuration file. Further provided are an application page presentation apparatus, a storage medium and an electronic device.

## Description

This disclosure claims priority to Chinese patent application No. 201811045455.X, entitled "Application Page Presentation Method and Apparatus, Storage Medium and Electronic Device" and filed with China National Intellectual Property Administration (CNIPA) on September 07, 2018. The contents of the aforementioned application are incorporated herein by reference.

### TECHNICAL FIELD

The present disclosure relates to the field of electronic devices, and particularly to a method and an apparatus for displaying an application page, a storage medium and an electronic device.

### BACKGROUND

With the development of terminal technology, terminal equipment has progressively changed from simply providing phonecalls to offering a platform on which universal software run. The platform no longer primarily aims to provide call management, but is directed at providing an operating environment incorporating various applications, including for example call management, game entertainment, working and recording, and mobile payment. With the widespread popularization, it has been deeply involved in various aspects of people's life and work.

However, as the functions of the applications become more and more powerful, the storage space needed by each application is also getting larger, which may probably affect the normal operation of the system of a smart phone. To solve this problem, the current practice is to set, on the browser, a designated entry for each application, and when a trigger operation performed by the user on the designated entry is detected, the browser may display the application page. When the application is started for the first time, the user triggers the download of the RPK package by clicking, and meanwhile, working related to initialization of the engine is performed. Only after the entire package is downloaded and verified, the application page that needs to be displayed is parsed and starts to be rendered, causing slow open of the application page.

### SUMMARY

Embodiments of the present disclosure provides a method and an apparatus for displaying an application page, a storage medium and an electronic device, by which the download of the configuration file and the rending can be implemented simultaneously, speeding up the open of the application page.

In a first aspect, a method for displaying an application page is provided by an embodiment of the present disclosure, which may include:
receiving an instruction of opening an application page, the instruction carrying an application identifier corresponding to an application;
sending the application identifier to a server;
receiving and caching a configuration file returned from the server according to the application identifier;
receiving, from the server, a view operation instruction generated by performing rendering on the application page on the server; and
displaying the application page, according to the view operation instruction and the configuration file.

In a second aspect, an apparatus for displaying an application page is further provided by an embodiment of the present disclosure, which may include a first receiving module, a caching module, a second receiving module and a displaying module.

The first receiving module may be configured to receive an instruction of opening an application page , the instruction carrying an application identifier corresponding to an application.

The caching module may be configured to send the application identifier to a server, receive and cache a configuration file returned from the server according to the application identifier.

The second receiving module may be configured to receive, from the server, a view operation instruction generated by performing rendering on the application page on the server.

The displaying module may be configured to display the application page, according to the view operation instruction and the configuration file.

In a third aspect, a storage medium is further provided by an embodiment of the present disclosure. The storage medium may have a computer program stored thereon, and the computer program, when being executed by a processor, may cause the operations of the method for displaying an application page mentioned above to be implemented.

In a fourth aspect, an electronic device is further provided according to an embodiment of the present disclosure, which may include a processor and a memory. The memory may store a plurality of instructions, and the processor may load the instructions in the memory to perform the following operations of:
receiving an instruction of opening an application page, the instruction carrying an application identifier corresponding to an application;
sending the application identifier to a server;
receiving and caching a configuration file returned from the server according to the application identifier;
receiving, from the server, a view operation instruction generated by performing rendering on the application page on the server; and
displaying the application page, according to the view operation instruction and the configuration file.

### BRIEF DESCRIPTION OF THE DRAWINGS

In order to explain the technical solutions in the embodiments of the present disclosure more clearly, drawings needed for the description of the embodiments will be simply introduced below. Obviously, the drawings described hereafter just illustrate some embodiments of the present disclosure. For those skilled in the art, other drawings may also be obtained from these drawings without any creative work.
FIG. 1 is a schematic diagram illustrating an environment in which a method for displaying an application page according to an embodiment of the present disclosed can be implemented.
FIG. 2 is a schematic flowchart of a method for displaying an application page according to an embodiment of the present disclosure.
FIG. 3 is a schematic diagram illustrating the engine framework for a page application provided by an embodiment of the present disclosure.
FIG. 4 is a schematic diagram illustrating an application scenario of the method for displaying an application page according to an embodiment of the present disclosure.
FIG. 5 is a schematic diagram illustrating the structure of an apparatus for displaying an application page according to an embodiment of the present disclosure.
FIG. 6 is a schematic diagram illustrating another structure of an apparatus for displaying an application page according to an embodiment of the present disclosure.
FIG. 7 is a schematic diagram illustrating the structure of an electronic device according to an embodiment of the present disclosure.
FIG. 8 is schematic structural diagram illustrating another structure of an electronic device according to an embodiment of the present disclosure.

### DETAILED DESCRIPTION OF PREFERRED EMBODIMENTS

In the drawings, same component symbols indicate same components. The principle of the present disclosure is illustrated by taking, as an example, a case where it is implemented in an appropriate computing environment. The following description is based on the exemplified embodiments of the present disclosure, and should not be construed as limiting other specific embodiments not detailed herein.

In the following description, specific embodiments of the present disclosure will be described with reference to steps and operations performed by one or more computers, unless otherwise stated. Therefore, it will be mentioned several times that these steps and operations are executed by the computer. Execution by the computer mentioned herein may include operations of a computer processing unit performed on electronic signals representing data in a structured form. These operations transform the data or maintain it at a location in the computer's memory system, which may be reconfigured or otherwise alter the operation of the computer in a manner well known to those skilled in the art. The maintained data structure of the data is the physical locations of the memory, which have the specific characteristics defined by the data format. However, although the principle of the present disclosure is described by the above text, which are not limiting. Those skilled in the art will understand that various steps and operations described below can also be implemented in hardware.

The principle of the present disclosure operates by using many other general-purpose or special-purpose computation, communication environments, or configurations. Well-known examples of the computing system, environment and configuration that are suitable for use in the present disclosure may include, but are not limited to, handheld phones, personal computers, servers, multiprocessor systems, microcomputer-based systems, mainframe computers, and a distributed computing environment, in which any of the aforementioned systems or devices is included.

Detailed description will be given below.

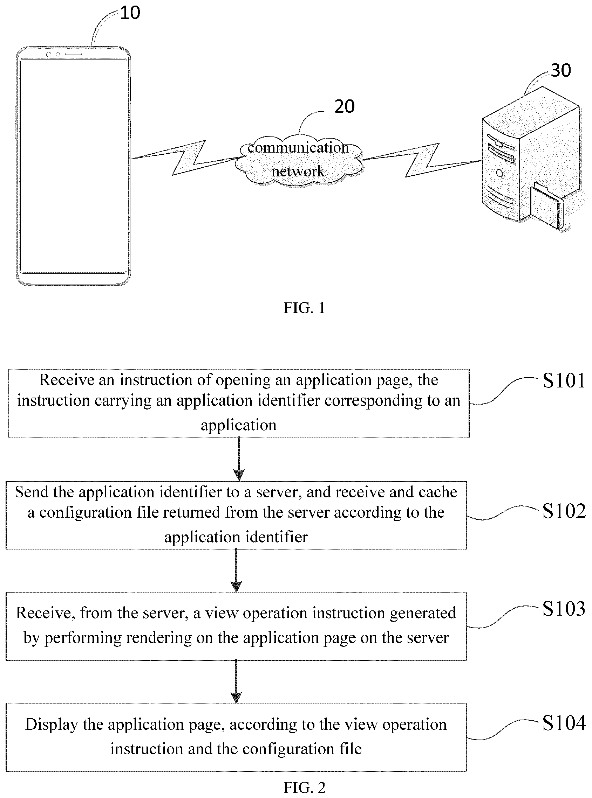

Referring to FIG. 1, a schematic diagram illustrating an environment in which a method for displaying an application page according to an embodiment of the present disclosure can be implemented is illustrated. As shown in FIG. 1, the implementation environment may include a smart phone 10, a communication network 20 and a server 30.

The operating system of the smart phone 10 may be an Android system, a BlackBerry system, an Apple system, or the like. The smartphone 10 and the server 30 may be connected via the communication network 20.

The communication network 20 may include a wireless network and a wired network. The wireless network may include a wireless wide area network, a wireless local area network, a wireless metropolitan area network, a wireless personal network or a combination thereof.

The server 30 may store configuration files of applications, where the configuration files containing data required for the running of the applications as well as audio data. The smart phone 10 may obtain a configuration file of an application from the server 30, generate a shortcut page according to the configuration file, and display the shortcut page. It should be understood that, the shortcut page is a kind of Web application, which is a software application using a Web browser to operate on the Internet or in an intranet, and is written in a Web language (such as HTML, JavaScript, or Java), and needs to be executed through a browser, for example, it may be accessed through an open platform in a unified manner; and it is commonly known as "Quick application". It should be noted that, as for the existing "Quick application", their installation packages and cache data generated during runtime are all stored in the server of the open platform, and such a Quick application does not need to be installed and run on the user device, thereby saving the memory of the user device as much as possible; and the user device can communicate with the server of the provider of the Web application through an application interface in the open platform, so as to access the Web application; and in this case, the server of the open platform acts as a proxy server, each page application corresponding to an application interface. In this way, the application can run without being installed, and the data required for the running of the application can be obtained from the server 30 timely.

The server 30 may also update the configuration files of the applications, so as to provide the updated configuration files to the smart phone 10.

In an embodiment, the server 30 may further store installation files of the applications, and the smart phone 10 may also obtain the installation files of the applications from the server 30, and run the applications completely by installing the installation files thereof. It can be easily conceived that the server 30 may also update the installation files of the applications, so as to provide the updated installation files to the smart phone 10.

This embodiment will be described from the perspective of an apparatus for displaying an application page. The apparatus may be integrated in an electronic device which may be for example a mobile networked device (such as a smart phone or a tablet).

A method for displaying an application page is provided by an embodiment of the present disclosure, which may include the following operations of:
receiving an instruction of opening an application page, the instruction carrying an application identifier corresponding to an application;
sending the application identifier to a server;
receiving and caching a configuration file returned from the server according to the application identifier;
receiving, from the server, a view operation instruction generated by performing rendering on the application page on the server; and
displaying the application page, according to the view operation instruction and the configuration file.

In an embodiment, the operation of receiving, from the server, a view operation instruction generated by performing rendering on the application page on the server may include: receiving, from the server, a plurality of sub-view operation instructions generated by performing stream rendering on the application page on the server.

In an embodiment, the operation of displaying the application page according to the view operation instruction and the configuration file may include: displaying the application page progressively according to the plurality of sub-view operation instructions and the configuration file.

In an embodiment, after the application page is displayed, the method may further include:
detecting whether an instruction of adding a shortcut to the application page is received; and
adding the shortcut on a desktop of an operating system, in response to detecting that the instruction of adding the shortcut to the application page is received.

In an embodiment, after the application page is displayed, the method may further include:
detecting whether an instruction of closing the application page is received; and
deleting the cached configuration file, in response to detecting that the instruction of closing the application page is received.

In an embodiment, after the application page is displayed, the method further may include:
receiving a user operation for the application page; and
opening a native page of the application according to the user operation.

In an embodiment, the configuration file may include an installation file of the application, and after the application page is displayed, the method may further include:
receiving an instruction of installing the application triggered by a user; and
installing the application according to the instruction of installing the application and the installation file of the application.

Referring to FIG. 2 firstly, a schematic flowchart of a method for displaying an application page according to an embodiment of the present disclosure is illustrated, and the method may include operations as follows.

In block S101, an instruction of opening an application page is received, the instruction carrying an application identifier corresponding to an application.

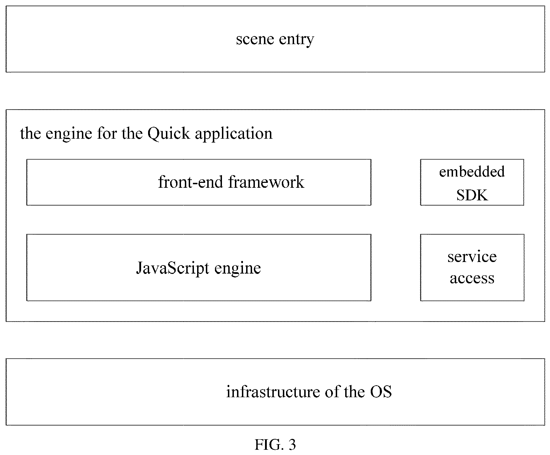

In an embodiment, the instruction of opening an application page may be generated according to an operation performed by the user on an electronic device, for example, the instruction of opening an application page is generated through a touch operation, a voice, or the like. The application may be a Quick application. Referring to FIG. 3, a schematic diagram illustrating the engine framework for a Quick application according to an embodiment of the present disclosure is illustrated.

In this figure, the top is the scene entry, the middle is the engine for the Quick application, and the bottom is the infrastructure of the operating system (OS) and hardware thereof. From the perspective of the execution path, the generic Web scenarios are supported by standard HTML5 (usually through the system's Webview components or customized Webviews), or by JS (JavaScript) + Native, which is lightweight and supports faster experience.

There are currently two forms of Quick applications: a stand-alone form in full screen mode and a card form in embedded mode. In the stand-alone form, what the user experiences is just like those a native application offers, including complete lifecycle management, page management, routing, and the like. The Quick application may be parasitic in the Activity of Android, the page is parasitic in the Fragment, and the instance is controlled by an independent background service. The another form is card, which is embedded into various corners of the system through an embedded SDK serving as an independent local control, and displays dynamic content in a lightweight manner. In terms of security isolation, better security can be achieved through sandbox, process isolation, permission control in combination with the support of the operating system layer.

In block S102, the application identifier is sent to the server, and a configuration file returned from the server according to the application identifier is received and cached.

In the embodiment of the present disclosure, the server may store configuration files of Web applications so as to generate shortcut pages of the Web applications. For example, the configuration file may include data and running logic that are required for the running of an application, as well as global configuration information. The global configuration information may indicate which pages the application is composed of, configure the window background color of the application page, configure the style of the navigation bar, configure the default title, and so on.

The configuration file in the embodiments of the present disclosure may enable an electronic device to open a Web application without installing the application, thereby saving the usage space of the electronic device. Of course, in other embodiments, the configuration file may also include an installation file of the application. The installation file is used for installation of the corresponding application, and the user selects whether to install the application.

In an embodiment, the electronic device may preset a cache space for the configuration file in the storage space. When the electronic device receives the configuration file returned from the server, the electronic device may cache the configuration file in the cache space. After that, the electronic device may call the configuration file to run and perform subsequent operations at any time.

In block S103, a view operation instruction sent by the server is received, where the view operation instruction is generated by performing rendering on the application page on the server.

In the related art, when the Quick application is started for the first time, the user triggers the download of the Quick application package by clicking, and meanwhile, working related to initialization of the engine is performed. Only after the entire package is downloaded and verified, the JavaScript file of the first page that needs to be displayed will be loaded and start to be rendered. JavaScript is a kind of scripting language belonging to the Web and has been widely used in developing Web applications, and it is generally used to add a variety of dynamic functions to the Web page, to provide the user with a smoother browsing effect and aesthetics. Since it is needed to download at first and then render, the referred page is opened slowly, a blank while screen even occurs and the user has to wait, which affects the user experience.

In this disclosure, while the electronic device downloads the RPK package, the server may perform the preprocessing in the cloud. After the preprocessing is completed, a view operation instruction may be sent to the electronic device. The preprocessing may include the rendering of the application page. The rendering of the page may include JavaScript loading, execution of page and JavaScript framework logics, calculations of the layout, the drawing to the native UI controls and so on.

In block S104, the application page is displayed according to the view operation instruction and the configuration file.

In an embodiment, upon downloading the RPK package, the electronic device may directly display the application page according to the view operation instruction and the configuration file. In this way, the execution of the Quick application is changed from the original way in which the download is performed at first and then are the parsing and rendering, into a way in which the download and the rendering are performed synchronously, thereby speeding up the rendering and thus the opening of the application page.

Further, since a native page of the application may be switched on without installation of the application, the user may have a tentative experience on the application, and may determine whether to install the application based on such tentative experience, increasing the choices for the user.

It should be noted that the configuration file will occupy a part of the storage space of the electronic device. When an instruction of closing the shortcut page triggered by the user is received, for example, a "Close" button in the page is clicked, the shortcut page of the application may be closed, and the cached configuration file may be deleted to save storage space of the electronic device. That is, after the application page is displayed, the method may further include:
detecting whether an instruction of closing the application page is received; and
deleting the cached configuration file, in response to detecting that the instruction of closing the application page is received.

In the embodiment of the present disclosure, the electronic device may be any intelligent electronic device having a networking function, such as a mobile phone, a tablet personal computer, a laptop computer, a personal digital assistant (PDA), a mobile internet device (MID) or a wearable device.

As can be seen from the above, according to the embodiments of the present disclosure, an instruction of opening an application page may be received, the instruction carrying an application identifier corresponding to an application; the application identifier is sent to the server, and a configuration file returned from the server according to the application identifier is received and cached; a view operation instruction sent by the server is received, where the view operation instruction is generated by performing rendering on the application page on the server; and the application page is displayed according to the view operation instruction and the configuration file. According to the embodiments of the present disclosure, in opening an application page on an electronic device, a corresponding configuration file is downloaded, and meanwhile, the page is rendered on the server so that the generated view operation instruction is sent to the electronic device, thereby reducing the operations of the electronic device, and improving the speed of opening the application page.

Based on the description of the previous embodiments, the method for displaying an application page of the present disclosure will be further described below.

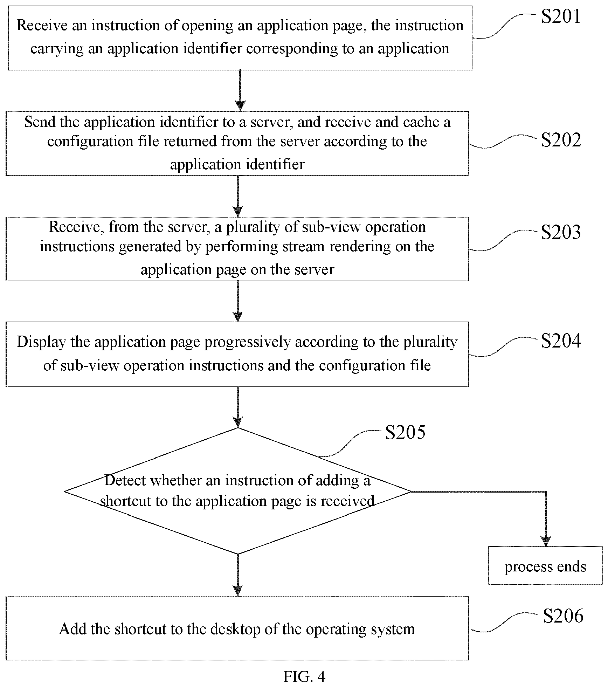

Referring to FIG. 4, a schematic flowchart of another method for displaying an application page according to an embodiment of the present disclosure is illustrated, and the method may include operations as follows.

In block S201, an instruction of opening an application page is received, the instruction carrying an application identifier corresponding to an application.

In an embodiment, the instruction of opening an application page may be generated according to an operation performed by the user on an electronic device, for example, the instruction of opening an application page is generated through a touch operation, a voice, or the like. The application may be a Quick application. The application identifier may be the name of the application or.

In block S202, the application identifier is sent to the server, and a configuration file returned from the server according to the application identifier is received and cached.

In the embodiment of the present disclosure, the server may store configuration files of Web applications so as to generate shortcut pages of the Web applications. For example, the configuration file may include data and running logic that are required for running an application, as well as global configuration information. The global configuration information may indicate which pages the application is composed of, configure the window background color of the application page, configure the style of the navigation bar, configure the default title, and so on.

The configuration file in the embodiment of the present disclosure may enable an electronic device to open a Web application without installing the application, thereby saving the usage space of the electronic device. Of course, in other embodiments, the configuration file may also include an installation file of the application. The installation file is used for installation of the corresponding application, and the user selects whether to install the application.

In block S203, a plurality of sub-view operation instructions sent by the server are received, where the sub-view operation instructions are generated by performing stream rendering on the application page on the server.

In an embodiment, the rendering of the application page in the server may also be stream rendering. The stream rendering may mean that resources required for startup may be preferentially rendered in the server and subsequent rendering follows until the rendering process is completed. The resources required for the first rendering are often small, so the stream rendering can significantly reduce the download latency, and such effect is more evident for a larger package.

The server may generate a plurality of sub-view operation instructions through the stream rendering, and then send them to the electronic device successively. Under normal circumstances, the resources required for startup are relatively fixed (which are public resources, global configuration files, JavaScript file(s) and pictures of the homepage, and so on), and they should be placed at the front of the files when the application page is rendered.

In block S204, the application page is displayed progressively according to the plurality of sub-view operation instructions and the configuration file.

In an embodiment, upon downloading the RPK package, the electronic device may directly display the application page according to the plurality of sub-view operation instructions and the configuration file. In this way, the execution of the Quick application is changed from the original way in which the download is performed at first and then are the parsing and rendering, into a way in which the download and the rendering are performed synchronously, thereby speeding up the rendering and thus the opening of the application page. In addition, since stream rending is adopted in the embodiments of the present disclosure, the application page may be displayed progressively, preventing a phenomenon of a long-term white screen, and improving the user experience.

In block S205, it is detected whether an instruction of adding a shortcut to the application page is received, and if yes, block S206 is performed, otherwise, the process ends.

In block S206, the shortcut is added to the desktop of the operating system.

In an embodiment, in consideration of a fact that the shortcut page of the application can display therein only a small part of information and functions, which would be probably insufficient to meet the user's needs, the user may also trigger a user operation so that the native page of the application can be opened according to the user operation. For example, by clicking an area outside the operation interface in the shortcut page, it is jumped to the native page. The native page of the application may include more information and functions, and so on.

In an embodiment, after the user uses a respective function of the native page of the application, he/she may download the complete installation package of the application for installation and use, if the user feels satisfied. On this basis, the native page may also include thereon an option to download the installation package. When it is detected that the user selects the option of downloading the installation package, the installation package of the application may be downloaded and then installed.

As can be seen from the above, according to the embodiment of the present disclosure, an instruction of opening an application page may be received, the instruction carrying an application identifier corresponding to an application; the application identifier is sent to the server, and a configuration file returned from the server according to the application identifier is received and cached; a plurality of sub-view operation instructions sent by the server are received, where the sub-view operation instructions are generated by performing stream rendering on the application page on the server; the application page is displayed progressively according to the plurality of sub-view operation instructions and the configuration file; and it is detected whether an instruction of adding a shortcut to the application page is received, and in response to detecting such an instruction, the shortcut is added to the desktop of the operating system. According to the embodiments of the present disclosure, in opening an application page on an electronic device, a corresponding configuration file is downloaded, and meanwhile, the page is rendered on the server so that the generated view operation instructions are sent to the electronic device, thereby reducing the operations of the electronic device, and improving the speed of opening the application page.

In order to facilitate implementation of the method for displaying an application page provided in the embodiments of the present disclosure, an apparatus corresponding to the method for displaying an application page is further provided by the embodiments of the present disclosure. Among others, the terms have the same meanings as those in the above-mentioned methods for displaying an application page, and the specific implementation details thereof may refer to the description in the method embodiments.

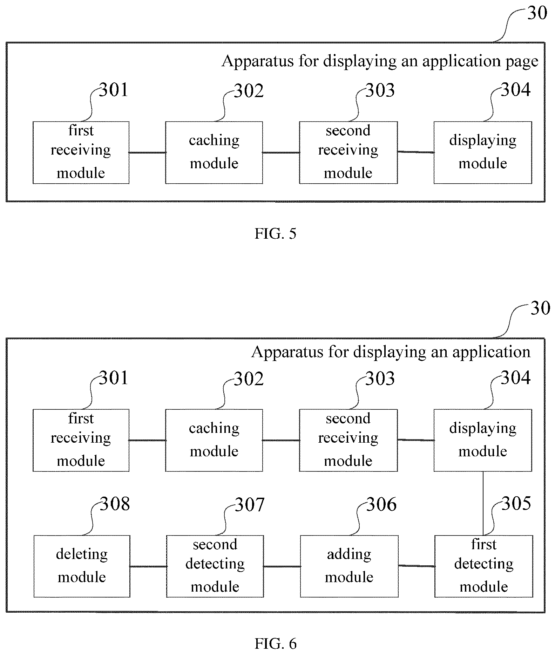

Referring to FIG. 5, a schematic diagram illustrating an apparatus for displaying an application page according to an embodiment of the present disclosure is illustrated, and the apparatus 30 for displaying an application page may include a first receiving module 301, a caching module 302, a second receiving module 303, and a displaying module 304.

The first receiving module 301 may be configured to receive an instruction of opening an application page, the instruction carrying an application identifier corresponding to an application.

The caching module 302 may be configured to send the application identifier to a server, receive and cache a configuration file that is returned from the server according to the application identifier.

The second receiving module 303 may be configured to receive, from the server, a view operation instruction generated by performing rendering on the application page on the server.

The displaying module 304 may be configured to display the application page according to the view operation instruction and the configuration file.

In an embodiment, the second receiving module 303 may be specifically configured to receive, from the server, a plurality of sub-view operation instructions generated by performing stream rendering on the application page on the server.

The displaying module 304 may be specifically configured to display the application page progressively according to the plurality of sub-view operation instructions and the configuration file.

In an embodiment, as shown in FIG. 6, the apparatus 30 for displaying an application page may further include a first detecting module 305 and an adding module 306.

The first detecting module 305 may be configured to detect whether an instruction of adding a shortcut to the application page is received, after the displaying module displays the application page.

The adding module 306 may be configured to add the shortcut on the desktop of the operating system, when the first detecting module detects that the instruction of adding the shortcut to the application page is received.

In an embodiment, the apparatus 30 for displaying an application page may further include a second detecting module 307 and a deleting module 308.

The second detecting module 307 may be configured to detect whether an instruction of closing the application page is received, after the displaying module displays the application page.

The deleting module 308 may be configured to delete the cached configuration file, when the second detecting module detects that the instruction of closing the application page is received.

As can be seen from the above, the apparatus 30 for displaying an application page provided in the embodiments of the present disclosure can receive an instruction of opening an application page, the instruction carrying an application identifier corresponding to an application, send the application identifier to a server, receive and cache a configuration file returned from the server according to the application identifier, receive from the server a view operation instruction generated by rendering the application page on the server, and display the application page according to the view operation instruction and the configuration file. According to the embodiments of the present disclosure, in opening an application page on an electronic device, a corresponding configuration file is downloaded, and meanwhile, the page is rendered on the server so that the generated view operation instruction is sent to the electronic device, thereby reducing the operations of the electronic device, and improving the peed of opening the application page.

The present disclosure further provides a storage medium on which a computer program is stored, the computer program, when being executed by a processor, may cause the method for displaying an application page provided by the method embodiments to be implemented.

The present disclosure further provides an electronic device, which may include a memory, a processor, and a computer program stored on the memory and executable on the processor. The program, when being executed by the processor, may cause the method for displaying an application page provided by the method embodiments to be implemented.

The present disclosure further provides an electronic device, which may include a processor and a memory, where the memory may store a plurality of instructions, and the processor may load and execute the instructions in the memory to perform the following operations of:
receiving an instruction of opening an application page, the instruction carrying an application identifier corresponding to an application;
sending the application identifier to a server;
receiving and caching a configuration file returned from the server according to the application identifier;
receiving, from the server, a view operation instruction generated by performing rendering on the application page on the server; and
displaying the application page, according to the view operation instruction and the configuration file.

In an embodiment, as for the receiving, from the server, a view operation instruction, the processor may be configured to perform the following operation of: receiving, from the server, a plurality of sub-view operation instructions generated by performing stream rendering on the application page on the server.

In an embodiment, as for the displaying the application page according to the view operation instruction and the configuration file, the processor may be configured to perform the following operation of: displaying the application page progressively according to the plurality of sub-view operation instructions and the configuration file.

In an embodiment, after the application page is displayed, the processor is further configured to perform the following operations of:
detecting whether an instruction of adding a shortcut to the application page is received; and
adding the shortcut on the desktop of the operating system, in response to detecting that the instruction of adding the shortcut to the application page is received.

In an embodiment, after the application page is displayed, the processor is further configured to perform the following operations of:
detecting whether an instruction of closing the application page is received; and
deleting the cached configuration file, in response to detecting that the instruction of closing the application page is received.

In an embodiment, after the application page is displayed, the processor is further configured to perform the following operations of:
receiving a user operation for the application page; and
opening a native page of the application according to the user operation.

In an embodiment, the configuration file may include an installation file of the application, and after the application page is displayed, the processor is further configured to perform the following operations of:
receiving an instruction of installing the application triggered by an user; and
installing the application according to the instruction of installing the application and the installation file of the application.

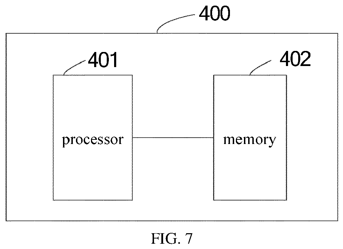

In further embodiment of the present disclosure, an electronic device is further provided. The electronic device may be a smart phone, a tablet computer or the like. As shown in FIG. 7, the electronic device 400 may include a processor 401 and a memory 402. The processor 401 and the memory 402 may be electrically connected.

The processor 401 may be the control center of the electronic device 400. The processor may use various interfaces and lines to connect various parts of the entire electronic device. In addition, the processor may load and run application programs stored in the memory 402, and call data stored in the memory 402, to execute various functions of the electronic device and process the data, so as to monitor the overall electronic device.

In this embodiment, the processor 401 in the electronic device 400 may load instructions corresponding to one or more application processes into the memory 402 and run the instructions loaded from the memory 402 so as to implement various functions, by following the operations of:
receiving an instruction of opening an application page, the instruction carrying an application identifier corresponding to an application;
sending the application identifier to a server;
receiving and caching a configuration file returned from the server according to the application identifier;
receiving, from the server, a view operation instruction generated by performing rendering on the application page on the server; and
displaying the application page according to the view operation instruction and the configuration file.

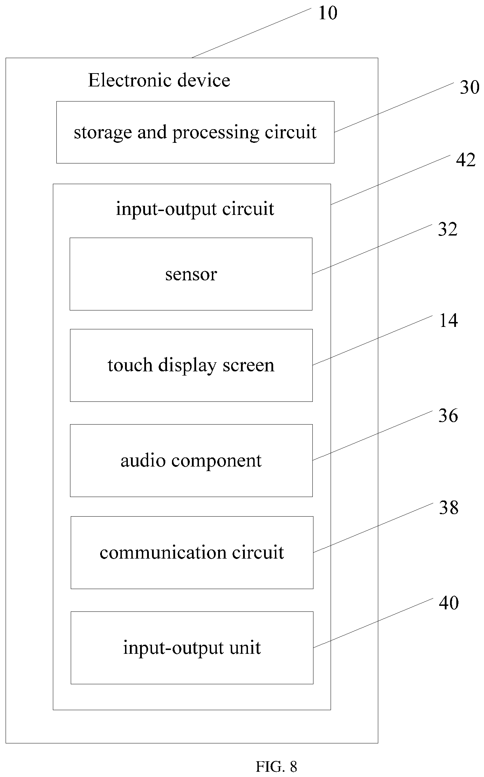

Referring to FIG. 8, the electronic device 10 may include a control circuit, and the control circuit may include a storage and processing circuit 30. The storage and processing circuit 30 may include a memory, such as a hard-disk drive, a non-volatile memory (such as a flash memory, or other electronic programmable read-only memory used to form a solid-state drive), or a volatile memory (such as a static or dynamic random access memory), and the embodiments of the disclosure are not limited thereto. A processing circuit in the storage and processing circuit 30 may be configured to control the operation of the electronic device 10. The processing circuit may be implemented based on one or more selected from a microprocessor, a microcontroller, a digital signal processor, a baseband processor, a power management unit, an audio codec chip, an Application-Specific Integrated Circuit, a display driver integrated circuit, and the like.

The storage and processing circuit 30 may be configured to run software in the electronic device 10, such as an Internet browsing application, a voice over internet protocol (VOIP) telephone calling application, an email application, a media playback application, and an operating system function. These software may be configured to perform some control operations, for example image acquisition based on a camera, ambient light measurement based on an ambient light sensor, proximity sensor measurement based on a proximity sensor, information display based on a status indicator such as an LED status indicator, touch event detection based on a touch sensor, functions associated with information display on multiple (e.g., layered) displays, operations associated with implementation of wireless communication functions, operations associated with collection and generation of audio signals, control operations associated with collection and processing of data on a button-pressing event, and other functions in the electronic device 10, and the embodiments of the present disclosure are not limited thereto.

The electronic device 10 may further include an input-output circuit 42. The input-output circuit 42 may be configured to enable the electronic device 10 to input and output data, that is, to allow the electronic device 10 to receive data from external devices and output data from the electronic device 10 to the external devices. The input-output circuit 42 may include a sensor 32. The sensor 32 may include an ambient light sensor, a proximity sensor based on light and capacitance, a touch sensor (for example, a light-based touch sensor and/or a capacitive touch sensor, where the touch sensor may be part of a touch display screen or may also be used as an touch sensor structure that can be independently used), an acceleration sensor, and other sensors.

The input-output circuit 42 may also include one or more displays, such as the display 14. The display 14 may include a liquid crystal display, an organic light emitting diode display, an electronic ink display, a plasma display, a display using other display technologies, or a combination thereof. The display 14 may include an array of touch sensors (i.e., the display 14 may be a touch display screen). The touch sensor may be a capacitive touch sensor formed by an array of transparent touch sensor electrodes (such as indium tin oxide (ITO) electrodes), or it may be a touch sensor formed using other touch technologies, such as acoustic touch, pressure-sensitive touch, resistive touch and optical touch, and the embodiments of the present disclosure are not limited thereto.

The electronic device 10 may further include an audio component 36. The audio component 36 may be configured to provide audio input and output functions for the electronic device 10. The audio component 36 in the electronic device 10 may include a speaker, a microphone, a buzzer, a tone generator, and other components for generating and detecting sound.

The communication circuit 38 may be configured to enable the electronic device 10 to communicate with an external device. The communication circuit 38 may include analog and digital input-output interface circuits, and a wireless communication circuit based on radio frequency signals and/or optical signals. The wireless communication circuit in the communication circuit 38 may include a radio frequency transceiver circuit, a power amplifier circuit, a low noise amplifier, a switch, a filter, and an antenna. For example, the wireless communication circuit in the communication circuit 38 may include a circuit that supports near field communication (NFC) by transmitting and receiving near field coupled electromagnetic signals. For example, the communication circuit 38 may include a near field communication antenna and a near field communication transceiver. The communication circuit 38 may also include a cellular phone transceiver and antenna, a wireless local area network transceiver circuit and antenna, and the like.

The electronic device 10 may further include a battery, a power management circuit, and other input-output units 40. The input-output unit 40 may include a button, a joystick, a click wheel, a scroll wheel, a touch pad, a keypad, a keyboard, a camera, a light emitting diode, and other status indicators.

The user may input commands through the input-output circuit 42 to control the operations of the electronic device 10, and may use the output data of the input-output circuit 42 to receive status information and other outputs of the electronic device 10.

In practice, the various modules mentioned above may be implemented as independent entities, or may be arbitrarily combined and implemented as one or several entities. The specific implementation of the various modules mentioned above may refer to the foregoing method embodiments, which will not repeated here.

It should be noted that, those of ordinary skill in the art can understand that all or part of the operations in the various methods of the foregoing embodiments may be completed by related hardware under instruction of a program. The program may be stored in a computer-readable storage medium, for example, it may be stored in a memory of the terminal equipment and executed by at least one processor in the terminal equipment. The execution process may include for example a process of page collection. The storage medium may include read only memory (ROM), random access memory (RAM), magnetic disks, optical disks and the like.

The method and apparatus for displaying an application page, the storage medium, and electronic device provided in the embodiments of the present disclosure have been described in detail above. The various functional modules thereof may be integrated in one processing chip; alternatively, each module may exist separately and physically; alternatively, two or more modules may be integrated into one module. The integrated modules may be implemented in the form of hardware or software functional modules. Specific examples are given herein to explain the principle and implementations of the present disclosure. The descriptions of the above embodiments are only used to facilitate understanding of the method and core ideas of the present disclosure. In addition, it is clear for those skilled in the art that the specific implementations and the application ranges may change at some extent, based on the concepts of the present disclosure. In summary, the contents of this description should not be construed as limiting this disclosure.

## Claims

1. A method for displaying an application page, comprising:
receiving an instruction of opening an application page, the instruction carrying an application identifier corresponding to an application;
sending the application identifier to a server;
receiving and caching a configuration file returned from the server according to the application identifier;
receiving, from the server, a view operation instruction generated by performing rendering on the application page on the server; and
displaying the application page, according to the view operation instruction and the configuration file.

2. The method for displaying an application page according to claim 1, wherein the receiving from the server the view operation instruction generated by performing rendering on the application page on the server, comprises:
receiving, from the server, a plurality of sub-view operation instructions generated by performing stream rendering on the application page on the server.

3. The method for displaying an application page according to claim 2, wherein the displaying the application page according to the view operation instruction and the configuration file, comprises:
displaying the application page progressively according to the plurality of sub-view operation instructions and the configuration file.

4. The method for displaying an application page according to claim 1, wherein after the application page is displayed, the method further comprises:
detecting whether an instruction of adding a shortcut to the application page is received; and
adding the shortcut on a desktop of an operating system, in response to detecting that the instruction of adding the shortcut to the application page is received.

5. The method for displaying an application page according to claim 1, wherein after the application page is displayed, the method further comprises:
detecting whether an instruction of closing the application page is received; and
deleting the cached configuration file, in response to detecting that the instruction of closing the application page is received.

6. The method for displaying an application page according to claim 1, wherein after the application page is displayed, the method further comprises:
receiving a user operation for the application page; and
opening a native page of the application according to the user operation.

7. The method for displaying an application page according to claim 1, wherein the configuration file comprises an installation file of the application; and
wherein after the application page is displayed, the method further comprises:
receiving an instruction of installing the application triggered by a user; and
installing the application according to the instruction of installing the application and the installation file of the application.

8. An apparatus for displaying an application page, comprising a first receiving module, a caching module, a second receiving module and a displaying module, wherein
the first receiving module is configured to receive an instruction of opening an application page, the instruction carrying an application identifier corresponding to an application;
the caching module is configured to send the application identifier to a server, receive and cache a configuration file returned from the server according to the application identifier;
the second receiving module is configured to receive, from the server, a view operation instruction generated by performing rendering on the application page on the server; and
the displaying module is configured to display the application page, according to the view operation instruction and the configuration file.

9. The apparatus for displaying an application page according to claim 8, wherein:
the second receiving module is specifically configured to receive, from the server, a plurality of sub-view operation instructions generated by performing stream rendering on the application page on the server.

10. The apparatus for displaying an application page according to claim 9, wherein:
the displaying module is specifically configured to display the application page progressively according to the plurality of sub-view operation instructions and the configuration file.

11. The apparatus for displaying an application page according to claim 8, wherein the apparatus further comprises a first detecting module and an adding module,
the first detecting module is configured to detect whether an instruction of adding a shortcut to the application page is received, after the displaying module displays the application page; and
the adding module is configured to add the shortcut on a desktop of an operating system, when the first detecting module detects that the instruction of adding the shortcut to the application page is received.

12. The apparatus for displaying an application page according to claim 8, wherein the apparatus further comprises a second detecting module and a deleting module,
the second detecting module is configured to detect whether an instruction of closing the application page is received, after the displaying module displays the application page; and
the deleting module is configured to delete the cached configuration file, when the second detecting module detects that the instruction of closing the application page is received.

13. A storage medium having a computer program stored thereon, wherein the computer program, when being executed by a processor, causes the operations of the method according to any one of claims 1-7 to be implemented.

14. An electronic device, comprising a processor and a memory, the memory storing a plurality of instructions, wherein the processor loads the instructions in the memory to perform operations including:
receiving an instruction of opening an application page, the instruction carrying an application identifier corresponding to an application;
sending the application identifier to a server;
receiving and caching a configuration file returned from the server according to the application identifier;
receiving, from the server, a view operation instruction generated by performing rendering on the application page on the server; and
displaying the application page, according to the view operation instruction and the configuration file.

15. The electronic device according to claim 14, wherein when receiving the view operation instruction from the server, the processor is configured to perform the following operations of:
receiving, from the server, a plurality of sub-view operation instructions generated by performing stream rendering on the application page on the server.

16. The electronic device according to claim 15, wherein when displaying the application page according to the view operation instruction and the configuration file, the processor is configured to perform the following operations of:
displaying the application page progressively according to the plurality of sub-view operation instructions and the configuration file.

17. The electronic device according to claim 14, wherein after the application page is displayed, the processor is further configured to perform operations of:
detecting whether an instruction of adding a shortcut to the application page is received; and
adding the shortcut on a desktop of an operating system, in response to detecting that the instruction of adding the shortcut to the application page is received.

18. The electronic device according to claim 14, wherein after the application page is displayed, the processor is further configured to perform operations of:
detecting whether an instruction of closing the application page is received; and
deleting the cached configuration file, in response to detecting that the instruction of closing the application page is received.

19. The electronic device according to claim 14, wherein after the application page is displayed, the processor is further configured to perform operations of:
receiving a user operation for the application page; and
opening a native page of the application according to the user operation.

20. The electronic device according to claim 14, wherein the configuration file comprises an installation file of the application, and after the application page is displayed, the processor is further configured to perform operations of:
receiving an instruction of installing the application triggered by an user; and
installing the application according to the instruction of installing the application and the installation file of the application.
